# EUROPÄISCHE PATENTSCHRIFT

(11) **EP 2 082 857 B1**
(45) Veröffentlichungstag und Bekanntmachung des Hinweises auf die Patenterteilung: **13.07.2011**
(21) Anmeldenummer: 08001400.4
(22) Anmeldetag: 25.01.2008
(51) Int. Cl.: B29B 17/00, B29B 17/02

(54) **Verfahren und Anlage zur Behandlung von Tonerbehältern und Kartuschen als gefährlicher Büroabfall zum Zweck einer Wiederverwertung**
Method and apparatus for handling ink containers and cartridges as dangerous office waste for the purposes of recycling
Procédé et installation destinés au traitement de cartouches à toner et de cartouches en tant que déchets bureautiques dangereux en vue d'un recyclage

(43) Veröffentlichungstag der Anmeldung: 29.07.2009
(73) Patentinhaber: Ekotoner Ltd., 1000 Sofia (BG)
(72) Erfinder: Kiss, Andras, 4002 Debrecen (HU); Orosz, Laszlo, 4254 Nyiradony (HU)
(74) Vertreter: Farago, Peter Andreas

(56) Entgegenhaltungen:
- DE-C1- 4 243 229
- DE-C1- 10 023 103
- US-A- 4 844 106
- US-A- 5 595 349

## Beschreibung

Die Erfindung betrifft ein Verfahren und technische Anlage zur Behandlung von Tonerbehältern und Kartuschen als gefährlicher Büroabfall zum Zweck einer Wiederverwertung. Die Erfindung ist den umweltfreundlichen technischen Verfahren zuzuordnen, die die Wiederverwertung und Neutralisierung der Tonerkartuschen, Druckerpatronen, Tintenstrahlpatronen oder Farbbänder von Laserdruckern, Tintenstrahldruckern oder Matrixdruckern als Giftmüll ermöglichen.

Die Abfallwirtschaft, die Handhabung und Neutralisierung von gefährlichem Sondermüll ist eines der brennenden Probleme unseres Alltags. Die Fachliteratur beschreibt viele verschiedene auf mechanischen, physikalischen oder chemischen Methoden basierenden Verfahren, deren Ziel die Wiederverwertung von Abfällen unterschiedlicher Art ist.

Das Patent DE 3 614 351 beschreibt ein Verfahren zur Gewinnung von faserigen bzw. granulierten Stoffen aus Haushalts- oder Industriemüll. Bei diesem Verfahren wird der Abfall zunächst zerkleinert und die eisenhaltigen Stoffe im Magnetfeld getrennt. Anschliessend wird der Restmüll klassifiziert: Die kleineren Bestandteile werden durch Schneiden zerkleinert, die grösseren Bestandteile granuliert.

Das Patent HU 210 696 und das Patent P 8 803 234 beschreiben ein Verfahren zur Wiederverwertung von Farbenmüll und Farbenschlamm. Farbabfälle werden dabei zu lösungsmittelhaltrigen Farbmaterialien oder zur wasserhaltigen Dispersionsfarbe oder zu Farbbeschichtungen wiederverarbeitet.

Das Patent P 9 201 881 beschreibt ein Verfahren zur Wiederverwertung von Metall-Nichtmetallmüll. Aus dem mit Metall kontaminierten Kunststoffmüll wird durch ein chemisches Verfahren Metall herausgelöst. Anschliessend wird das Metall durch ein elektrochemisches Verfahren zementiert und eingedickt.

Das Patent FR 98 038 884 beschreibt die Wiederaufbereitung von Vinyl-Chlorid-Polymer-Produkten durch die Kombination von physikalischen und chemischen Verfahren.

Das Patent P 0 204 466 betrifft ein Verfahren zur Neutralisierung und Wiederverwendung von durch Pflanzenschutzmitteln, Chemikalien kontaminiertem bzw. geruchskontaminiertem Kunststoffabfall. Bei diesem Verfahren wird der kontaminierte Abfall mit Aktivkohle gefiltert. Das Patent P 9 102 592 beschreibt ein Verfahren zur Wiedergewinnung von Kunststoff aus Abfällen. Bei diesem Verfahren wird der Mischkunststoff granuliert und nach Gewicht sortiert.

Aus dem Patent WO 9 748 761 ist ein Verfahren bekannt, wie aus einer Mischung von Kunststoffabfällen durch mehrstufige Wärmebehandlung wiederverwendbare Produkte hergestellt werden können.

Das Patent WO 9 641 681 betrifft ein Verfahren, das die Wiederaufbereitung von stark verschmutztem Kunststoffmüll zu Baumaterialien ermöglicht.

Das Patent DE 4 243 229 C1 beschreibt ein Verfahren und eine Vorrichtung zum Reinigen von Kunststoffabfälle, bei dem diese in einer räumlich festgelegten, losen Schüttung angeordnet sind. Bei diesem Verfahren werden die Kunststoffabfälle durch Hochdruckwasserstrahlen behandelt und somit Verunreinigungen abgeführt.

Aus dem Patent US 4,844,106 A ist ein Verfahren und eine Vorrichtung bekannt, zum Reiningen von Tonscherben in einer Flüßigkeit und mithilfe von Spritzdrüsen.

Das Patent HU 218 853 beschreibt ein Verfahren, bei dem aus verbrauchten Kunststoffresten chemische Werkstoffe und flüssige Brennstoffe hergestellt werden können.

Aus dem Patent HU 215 754 ist ein Verfahren bekannt, wie aus verbrauchten Batterien und Akkumulatoren u.a. Kunststoff gewonnen werden kann.

Das Patent HU 209 940 betrifft ein Verfahren zur Neutralisierung und Behandlung von giftigem oder kontaminiertem Kunststoffmüll durch pyrolytische Verbrennung.

Aus dem Patent DE 10 023 103 C1 ist ein Verfahren und eine Vorrichtung bekannt, zum Zerkleinern von Kunststoffkartuschen, insbesondere entleerte Farbkartuschen, zum Zwecke der ausschließenden Entsorgung.

Die Behandlung und Wiederverwertung von im Bürogebrauch in grossen Mengen verwendeten Tonerbehältern und Kartuschen ist noch nicht vollständig gelöst. Das Problem besteht darin, dass die Kartuschen von Laserdruckern und Druckerpatronen von Tintenstrahldruckern als giftige Schadstoffabfälle gelten. Die Handhabung dieser Restprodukte besteht zur Zeit darin, dass diese gesammelt und deponiert werden. Damit gehen viele Bestandteile verloren, die für die Wiederverwertung geeignet wären, wie z.B. Kunststoffteile in grossen Mengen. Ausserdem ist für die Lagerung dieser Teile ein grosser Platzbedarf erforderlich.

Mit der Erfindung ist es uns gelungen, ein Verfahren zu entwickeln, das die Wiederverwertung von Tonerbehältern und Kartuschen als gefährlicher Büroabfall ermöglicht.

Das von uns entwickelte Verfahren ist ein komplexes Verfahren, das auf der Kombination von mechanischen und physikalischen Methoden basiert und geeignet ist, Kunststoffabfälle verschiedener Gefährlichkeitsstufen in großen Mengen kontinuierlich und umweltschonend wiederaufzubereiten. Gleichzeitig werden Abfälle wieder verwendet und Giftmüll neutralisiert.

Die Erfindung basiert auf der Erkenntnis, dass der als gefährlicher Müll geltende Druckerfarbenstaub sicher aufgefangen und zusammengesammelt werden kann sowie die verunreinigten Kunststoffteile gereinigt und wiederverwendet werden können.
Der Erfindung liegt die Aufgabe zugrunde, Wiederverwertung und Neutralisierung der Tonerkartuschen, Druckerpatronen, Tintenstrahlpatronen oder Farbbänder von Laserdruckern, Tintenstrahldruckern oder Matrixdruckern als Giftmüll zu ermöglichen. Bei diesem Verfahren wird der Druckerfarbenstaub durch Absaugung mit einer Vakuumanlage sowie Auffangen durch einen Filter gesammelt und deponiert. Die Kunststoffteile werden in einer geschlossenen tunnelförmigen Hochdruckreiniger-Waschanlage gereinigt. Das Abwasser wird anschließend gereinigt und rückgeführt. Die Teile der Tonerbehälter werden gegebenenfalls mit Hand demontiert und nach Beschaffenheit sortiert.

Das Objekt der Erfindung ist die für die Ausführung des oben genannten Verfahrens geeignete technische Anlage.

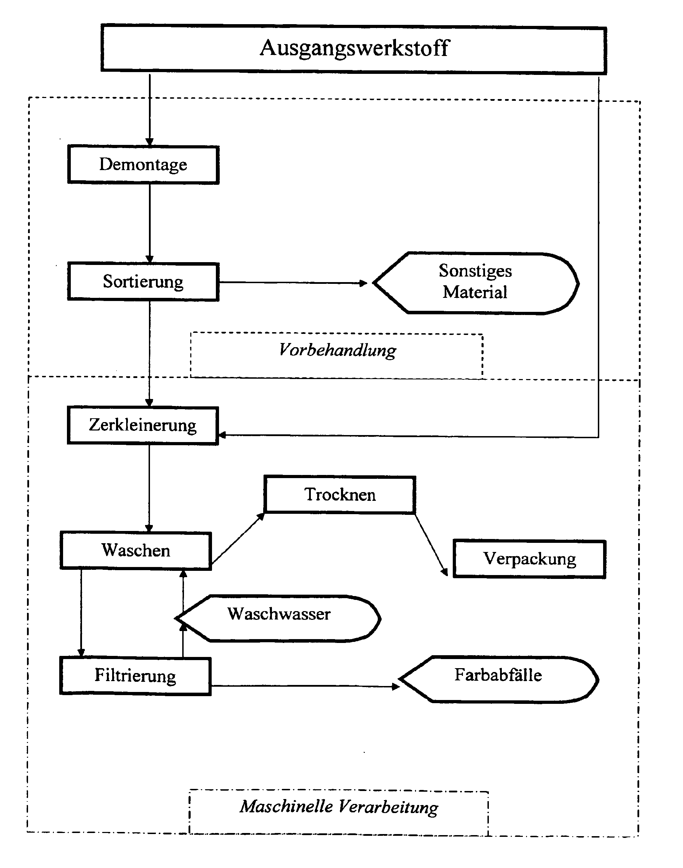

Die Abbildung 1 beschreibt das stichpunktartiges Betriebsablaufschema.

Unter den verbrauchten Büromaschinenteilen können Toner, Druckerpatronen und Matrixbänder direkt wiederaufbereitet werden, da sie im Grunde genommen nur aus Kunststoff bestehen. Die Tonerbehälter von Laserdruckern beinhalten ca. 70% Kunststoff, aus diesem Grund werden sie vorbehandelt, bevor sie in der Anlage weiterverarbeitet werden: Sie werden manuell demontiert und nach Beschaffenheit sortiert.

Bei dem Verfahren werden zunächst die Kunststoffteile zerkleinert. Der Prozess der Zerkleinerung vollzieht sich in zwei Phasen. In der ersten Phase werden die Kunststoffteile zertrümmert und aufgeschlossen, anschließend in einer Mühle geschrotet. Nach der Zerkleinerung werden die Teile der Waschanlage zugeführt. Die Reinigung in der Waschanlage ist einer der wichtigsten Teile des Verarbeitungsprozesses, da die Farbreste vollkommen entfernt werden müssen. In der tunnelförmigen Hochdruckreiniger-Waschanlage werden die Kunststoffteile mit einem gelochten endlosen Förderband transportiert. Diese werden im Tunnel mit einem Hochdruckreiniger gereinigt. Die Wasserversorgung ist mit Rückführung gewährleistet. Der Wasserverlust wird etappenweise ersetzt.
Das Abwasser wird in einem Klärbehälter aufgefangen, dann von Farbresten gereinigt und wieder verwendet. Die Reinigung des Abwassers erfolgt durch einen Filter. Je nach Beschaffenheit der Farbreste ist auch Klärung und Abhub anwendbar. Nach dem Waschen wird der Kunststoff in die Trockneranlage gelegt. Nach dem Trocknen wird der lufttrockene Kunststoff verpackt.

Die Hochleistungsabsaugtechnik gewährleistet während des gesamten Verarbeitungsprozesses kontinuierliche Luftabsaugung und trägt damit Farbfeinstaub zusammen. Sinngemäß wird die Absaugung in der Waschanlage nicht betätigt.

Das Verfahren und die technische Anlage werden durch das Betriebsablaufschema in der Abbildung 1 dargestellt. Die Bestimmung des Wasserbedarfes beruht auf einer Materialmenge von ca. 16 Kilogramm/Minute.

Die Vorbehandlung ist notwendig bei der Aufarbeitung der Tonerbehälter von Laserdruckern. Im Falle der Tonerkartuschen von Laserdruckern werden diese mit Hand demontiert und nach Beschaffenheit der einzelnen Teile sortiert.
Die Vorbehandlung ist die aufwendigste und damit teuerste Phase der Aufarbeitung, da hier fachkundige Handarbeit benötigt wird.

Der Sortiertisch ist ein Förderband (Breite 1200 mm) mit veränderbarer Geschwindigkeit (0,05-0,3 m.s-¹).

Während der Vorbehandlung wird zweckgemäß eine gezielte Vakuumabsaugung mit Vakuumpistole vorgenommen, um die meisten Farbpartikeln zu entfernen.

Der sortierte Kunststoff wird zusammen mit den anderen Kunststoffteilen, die keine Vorbehandlung benötigen, mit dem Förderband in die mit Hammer ausgestattete Zerkleinerungsanlage transportiert. Hier werden die Kunststoffteile zunächst zertrümmert, dann fallen sie mit Hilfe der Gravitation in die Mühle, in der die Teile auf Größe 0,5-5,0 cm, bevorzugt 0,5-1,5 cm eingemahlen werden. Der zerkleinerte, mit Farbresten verunreinigte Kunststoff wird mit dem Förderband in die Hochdruckreiniger-Waschanlage transportiert. Die Waschanlage hat ein geschlossenes System. Die Reinigung wird in einem 1-1,5 Meter langen Tunnel unter einem Druck von 15 Bar vollzogen.
Der Wasserbedarf beträgt 4-5 Liter/Kilogramm. In dem geschlossenen System der Waschanlage werden 800 Liter Wasser fünfmal pro Stunde rückgeführt. Dies bedeutet einen Wasserumsatz von 4000 Liter/Stunde. Der Wasserverlust beträgt ca. 19 Liter/Stunde. Das fehlende Wasser wird vierstündlich nachgefüllt. Zu der Waschanlage gehört ein 800 Liter-Klärbehälter, in dem sich die im Reinigungsprozess zurückbleibende Farbreste sammeln. Vor der Rückführung des Wassers wird das Abwasser gefiltert und die Farbreste werden entfernt. Daher verfügt die Waschanlage auch über eine Filtrieranlage. Je nach Beschaffenheit der Farbe können auch andere Methoden angewendet werden, wie z.B. Klärung oder Abhub sowie deren Kombination.

Der in dem Klärbehälter angesammelte und/oder gefilterte Farbschlamm wird von der Wassermenge getrennt und als Schadstoffabfall deponiert.
Aus der Waschanlage wird der gereinigte Kunststoff mit dem Förderband in einen Heißluft-Trockner transportiert. Die Heißlufttrocknung wird bei 80-90° durchgeführt. Die feuchte Luft wird kontinuierlich abgesaugt. Man lässt den lufttrockenen Kunststoff abkühlen. Zum Schluss wird der Kunststoff in der Verpackungsanlage verpackt.

In der technischen Anlage sorgt eine Hochleistungsabsaugtechnik für die Absaugung von Farbpartikeln. Die Anlage ist mit einer Sicherung gegen Überspannung versehen. Der Antrieb wird durch einen Motor mit einer Leistung von 4 KW gesichert. Die Drehzahl kann verändert werden. Die Luft wird durch einen Trommelsieb gefiltert. Farbreste können aufgefangen und als Giftmüll deponiert werden.

Die oben aufgeführte technische Anlage und das Verfahren sind für den industriellen Einsatz in der umweltschonenden Wiederverwertung von Tonerbehältern und Kartuschen geeignet. Die als Giftmüll geltenden Farbreste werden getrennt und mit geringem Platzbedarf deponiert.

## Patentansprüche

1. Verfahren zur Wiederverwertung von Tonerkartuschen, Druckerpatronen, Tintenstrahlpatronen oder Farbbändern von Laserdrucker, Tintenstrahldruckern oder Matrixdruckern, das mechanische und physikalische Methoden miteinander kombiniert, mit den folgenden Schritten: die Abfälle werden gegebenenfalls mit Hand demontiert und nach Beschaffenheit sortiert, die Kunststoffteile werden zerkleinert, gereinigt, getrocknet und verpackt, die Kunststoffteile werden zuerst zertrümmert und anschliessend weiter gemahlen, der zerkleinerte Kunststoff wird in einer geschlossenen tunnelförmigen Hochdruckreiniger-Waschanlage gereinigt, die Farbreste werden vom Abwasser durch Klärung, Filtrierung oder Abhub getrennt, anschliessend getrocknet und deponiert, das Waschwasser wird in die Waschanlage rückgeführt, das fehlende Wasser wird nachgefüllt, **dadurch gekennzeichnet dass** während des Verarbeitungsprozesses die Absaugung von Farbfeinstaub kontinuierlich gewährleistet wird.

2. Verfahren nach Anspruch 1, wobei die Demontage und Sortierung unter gezielter Vakuumabsaugung durchgeführt wird.

3. Verfahren nach Anspruch 1 oder 2, wobei die Kunststoffteile während der Vorbehandlung zertrümmelt, zerkleinert und gemahlen werden.

4. Verfahren nach Anspruch 1 bis 3, wobei die Kunststoffteile in der Grösse von 0,5-5,0 cm, bevorzugt 0,5-1,5 cm zerkleinert werden.

5. Verfahren nach Anspruch 1 bis 4, wobei der Wasserbedarf für die Reinigung 4-5 Liter/Kilogramm beträgt.

6. Verfahren nach Anspruch 1 bis 5, wobei die Reinigung unter einem Druck von 15 Bar durchgeführt wird.

7. Verfahren nach Anspruch 1 bis 6, wobei Zusatzstoffe und/oder Reinigungssubstanzen dem Waschwasser hinzugefügt werden.

8. Technische Anlage für die Ausführung des Verfahrens nach Anspruch 1 mit folgenden Merkmalen: die technische Anlage besteht aus einem Förderband, einer Zerkleinerungsanlage mit Hammer und Mühle, einer tunnelförmigen Hochdruckreiniger-Waschanlage mit Klärbehälter, einem Heissluft-Trockner, die Einheiten der technischen Anlage sind aufeinander abgestimmt, damit der kontinuierlicher Betrieb der Anlage gewährleistet werden kann, **dadurch gekennzeichnet dass** die Anlage mit einer Hochleistungsabsaugtechnik zum Zweck der kontinuierlichen Absaugung von Feinstaub, insbesondere von Farbfeinstaub ausgestattet ist

9. Technische Anlage nach Anspruch 8, wobei die Anlage mit einer Hochleistungsabsaugstechnik mit veränderbarer Drehzahl ausgestattet und mit einer Sicherung gegen Überspannung versehen ist.

## Claims

1. Method for recycling toner cartridges, printing cartridges, ink-jet cartridges or ribbon cartridges of laser printers, ink-jet printers or matrix line printers, which combines mechanical and physical methods, having the following steps:
if necessary, the waste components are disassembled manually and sorted according to type,
the plastic components are crushed, cleaned, dried and packaged,
the plastic components are first smashed and then ground further,
the crushed plastics are cleaned in a closed tunnel-shaped high-pressure cleaning washing facility,
the color residues are separated from the waste water by purification, filtration or lifting, then dried and deposited,
the wash water is reintroduced into the washing facility,
the missing water is refilled,
**characterized in that** during processing, the aspiration of colored fine dust is continuously ensured.

2. Method according to Claim 1, where disassembling and sorting are performed with deliberate vacuum aspiration.

3. Method according to Claim 1 or 2, where the plastic components are smashed, crushed and ground during preprocessing.

4. Method according to Claims 1 through 3, where the plastic components are crushed to the size of 0.5-5.0 cm, preferably 0.5-1.5 cm.

5. Method according to Claims 1 through 4, where the water demand for cleaning is 4-5 liters/kilogram.

6. Method according to Claims 1 through 5, where cleaning is performed under a pressure of 15 bar.

7. Method according to Claims 1 through 6, where additives and/or cleaning substances are added to the wash water.

8. Technical plant for performing the method according to Claim 1, having the following features:
the technical plant consists of a conveyor belt, a size reduction facility with hammer and mill, a tunnel-shaped high-pressure cleaning washing facility having a filtering basin, a hot-air drier,
the units of the technical plant are coordinated with each other so that continuous operation of the plant can be ensured, **characterized in that** the facility is equipped with a high-performance aspiration technique for the purpose of continuous aspiration of fine dust, especially colored fine dust.

9. Technical plant according to Claim 8, where the plant is equipped with a high-performance aspiration technique with variable rotation speed and with a fuse against over-voltage.

## Revendications

1. Procédé de recyclage de cartouches d'agent de contraste, cartouches d'imprimante, de cartouches à jet d'encre ou rubans encreurs d'imprimantes laser, imprimantes à jet d'encre ou imprimantes matricielles, combinant ensemble des méthodes mécaniques et physiques, présentant les étapes ci-après : les déchets sont, le cas échéant, démontés à la main et tris selon leur état, les parties en matière synthétiques sont broyées, nettoyées, séchées et emballées, les parties en matière synthétiques sont d'abord désintégrées et, ensuite, de nouveau broyées, la matière synthétique broyée est nettoyée dans une installation de lavage à nettoyeur haute pression fermée, en forme de tunnel, les restes d'encre sont séparés des eaux usées par clarification, filtrage, ou décantation, puis séchés et mis en décharge, l'eau de lavage est recyclée dans l'installation de lavage, le manque d'eau fait l'objet d'un rechargement, **caractérisé en ce que** l'aspiration de fines poussières d'encre est assurée en continu pendant le processus de traitement.

2. Procédé selon la revendication 1, dans lequel le démontage et le tri sont effectués sous une aspiration sous vide pratiquée à dessein.

3. Procédé selon la revendication 1 ou 2, dans lequel les parties en matière synthétique sont désintégrées, broyées et moulues pendant le pré-traitement.

4. Procédé selon l'une des revendications 1 à 3, dans lequel les parties en matière synthétique sont broyées à une taille dans la fourchette comprise entre 0,5 et 5,0 cm, de préférence entre 0,5 et 1,5 cm.

5. Procédé selon l'une des revendications 1 à 4, dans lequel le besoin en eau pour le nettoyage est dans la fourchette comprise entre 4 et 5 litres/kilogramme.

6. Procédé selon l'une des revendications 1 à 5, dans lequel le nettoyage est effectué sous une pression de 15 bar.

7. Procédé selon l'une des revendications 1 à 6, dans lequel des additifs et/ou des substances de nettoyage sont ajoutées à l'eau de lavage.

8. Installation technique pour la mise en oeuvre du procédé selon la revendication 1, présentant les caractéristiques suivantes : l'installation technique est composée d'une bande transporteuse, d'une installation de broyage équipée d'un marteau et d'un moulin, d'une installation de lavage à nettoyeur haute pression en forme de tunnel avec un récipient de clarification, d'un sécheur à air chaud, les unités de l'installation technique sont adaptées les unes aux autres, afin que le fonctionnement en continu de l'installation puisse être assuré, **caractérisé en ce que** l'installation est équipée d'une technique d'aspiration à haute puissance, dans le but d'assurer une aspiration continue de poussières fines, en particulier de poussières fines d'encre.

9. Installation selon la revendication 8, dans laquelle l'installation est équipée d'une technique d'aspiration à haute puissance à vitesse de rotation variable et est munie d'une sécurité contre une surtension électrique.
